(19)

Europäisches
Patentamt
European
Patent Office
Office européen
des brevets

(11) **EP 4 246 185 B1**

(12) **EUROPEAN PATENT SPECIFICATION**

(45) Date of publication and mention
of the grant of the patent:
**25.06.2025  Bulletin 2025/26**

(21) Application number: **20966900.1**

(22) Date of filing: **24.12.2020**

(51) International Patent Classification (IPC):
*G01S 17/58* (2006.01)    *G01S 17/95* (2006.01)
*G01S 17/34* (2020.01)

(52) Cooperative Patent Classification (CPC):
**G01S 17/95; G01S 17/34; G01S 17/58; Y02A 90/10**

(86) International application number:
**PCT/JP2020/048332**

(87) International publication number:
**WO 2022/137410 (30.06.2022 Gazette 2022/26)**

(54) **LASER RADAR DEVICE AND WIND MEASUREMENT METHOD**

LASERRADARVORRICHTUNG UND WINDMESSVERFAHREN

DISPOSITIF RADAR-LASER ET PROCÉDÉ DE MESURE DU VENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.09.2023  Bulletin 2023/38**

(73) Proprietor: **MITSUBISHI ELECTRIC
CORPORATION**
**Chiyoda-ku**
**Tokyo 100-8310 (JP)**

(72) Inventors:
• **HIROSAWA, Kenichi**
**Tokyo 100-8310 (JP)**

• **NISHIDA, Mio**
**Tokyo 100-8310 (JP)**
• **HASEGAWA, Kiyotomo**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(56) References cited:
WO-A1-2011/158359       WO-A1-2018/038128
DE-A1- 102019 001 275     US-A1- 2005 162 637
US-A1- 2019 018 138

**Description**

TECHNICAL FIELD

The present disclosed technique relates to a laser radar device and a wind measurement method using the laser radar device.

BACKGROUND ART

A laser radar device called a light detection and ranging (LiDAR) device has been used for a long time in the fields of geology and meteorology, and in recent years, attracts attention also, for example, in the field of automatic driving of an automobile.

An operation principle of the laser radar device is to obtain information on a distance to a target and a speed of the target by irradiating the target with laser light and analyzing the light that has hit the target and bounced back. As indicated by the name, the laser radar device may be considered as a radar device using laser light. When it is desired to obtain a distance to the target, it is possible to obtain the distance by measuring time (time of flight, hereinafter referred to as "TOF") from when the laser light is emitted to when the laser light is reflected and returned, and multiplying a speed of the laser light by the TOF. When it is desired to obtain a speed of the target, it is possible to obtain the speed by analyzing a frequency of the reflected light, obtaining a Doppler frequency, and using a relationship between the frequency of the emitted laser light and the Doppler frequency.

In a case of an application of simultaneously obtaining the distance to the target and the speed of the target, the TOF and the Doppler frequency are to be simultaneously obtained as described above. In order to directly obtain these, the laser radar device needs a sensor corresponding to two states of time and frequency. Regarding this, a technique for converting TOF into information on frequency using a frequency modulated continuous wave (hereinafter, referred to as "FMCW") is disclosed. In particular, Non-Patent Literature 1 discloses a technique in which a frequency difference between transmitted light and received light caused by a distance to a target and a frequency difference between the transmitted light and the received light caused by a speed of the target are separately obtained by combining an up-chirp FMCW and a down-chirp FMCW (Figure 1 of Non-Patent Literature 1).

US 2019/018138 A1 discloses a method of frequency modulation for interference free optical time of flight systems.

DE 10 2019 001275 A1 discloses a device and a method for measuring a distance to a reflective object.

US 2005/162637 A1 discloses a laser detecting and ranging apparatus.

CITATION LIST

NON-PATENT LITERATURE

Non-Patent Literature 1: D. Pierrottet et al. "Flight test performance of a high precision navigation Doppler Lidar", Proceedings of SPIE Vol. 7323, 732311 (2009)

SUMMARY OF INVENTION

TECHNICAL PROBLEM

In the technique disclosed in Non-Patent Literature 1, the frequency of transmitted light constantly changes, and information on up-chirp and down-chirp is used for analysis. Non-Patent Literature 1 discloses the technique as an application of navigation of a lunar surface exploration mobile body, and a problem does not occur for such a target at a certain distance (referred to as a hard target).

However, in a case of wind measurement, usually, there is aerosol at a plurality of places in an irradiation direction of laser light, and light scattered by the aerosol at the plurality of places is received in an overlapping manner. Therefore, a waveform of received light is complicated. In an application of wind measurement, the laser radar device is required to have a mechanism for separating frequency information resulting from a distance to a target and frequency information resulting from a speed of the target by a simpler method.

An object of the present disclosed technique is to solve the above problem, and to provide a laser radar device including a mechanism for separating frequency information resulting from a distance to a target and frequency information resulting from a speed of the target by a simple method.

SOLUTION TO PROBLEM

In order to solve the above problem, the present invention provides a laser radar device according to claim 1, and a wind measurement method according to claim 5.

ADVANTAGEOUS EFFECTS OF INVENTION

Since the laser radar device according to the present disclosed technique has the above configuration, the frequency of emitted laser light has discrete values at intervals of the frequency difference F. Therefore, TOF corresponding to a distance to a target appears in units of the frequency difference F for each time T, and a Doppler frequency corresponding to a speed of the target appears as a finer change than the frequency difference F. As described above, the present disclosed technique provides a laser radar device including a mechanism for separating frequency information resulting from a distance to a target and frequency information resulting from a speed of the target by a simple method.

BRIEF DESCRIPTION OF DRAWINGS

FIG. 1 is a configuration diagram illustrating a configuration of a laser radar device according to a first embodiment.
FIG. 2 is a configuration diagram illustrating a configuration example of a receiving circuit 210 of the laser radar device according to each of the first and second embodiments.
FIG. 3 is a graph illustrating frequency modulation applied by a phase modulator or a frequency modulator of a laser radar device according to the present disclosed technique.
FIG. 4 is a graph illustrating the frequency modulation illustrated in FIG. 3 as phase modulation.
FIG. 5 is a graph illustrating local oscillator light and received light in the laser radar device according to the present disclosed technique in comparison with each other as a time change in frequency.
FIG. 6 is a configuration diagram illustrating a configuration of a laser radar device according to each of the second and third embodiments.
FIG. 7 is a configuration diagram illustrating a configuration example of a receiving circuit 210 of the laser radar device according to the third embodiment.
FIG. 8 is a configuration diagram illustrating a configuration of a laser radar device according to a fourth embodiment.
FIG. 9 is a configuration diagram illustrating a configuration example of a receiving circuit 211 of the laser radar device according to the fourth embodiment.
FIG. 10 is a graph illustrating frequency modulation applied by each of a first frequency modulator 23 and a second frequency modulator 24 of the laser radar device according to the fourth embodiment.
FIG. 11 is a configuration diagram illustrating a modified configuration example of the laser radar device according to the fourth embodiment.
FIG. 12 is a configuration diagram illustrating a configuration of a laser radar device according to a fifth embodiment.
FIG. 13 is a configuration diagram illustrating a configuration example of a receiving circuit 211 of the laser radar device according to the fifth embodiment.

DESCRIPTION OF EMBODIMENTS

Embodiments according to the present disclosed technique will be apparent by the following description with reference to the drawings.

First Embodiment.

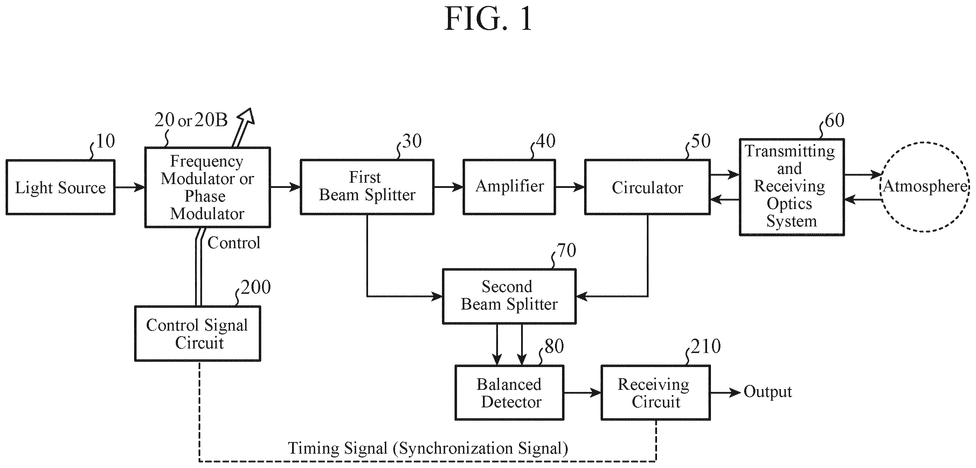

FIG. 1 is a configuration diagram illustrating a configuration of a laser radar device according to a first embodiment. The laser radar device according to the first embodiment includes a Light source 10, a frequency modulator 20 or a phase modulator 20B, a first beam splitter 30, an amplifier 40, a circulator 50, a transmitting and receiving optics system 60, a second beam splitter 70, a balanced detector 80, a control signal circuit 200, and a receiving circuit 210.
As the Light source 10, a laser light source having a narrow line width is used. A light source at a wavelength band of 1.5 $\mu$m is preferable from the viewpoint of eye safety. Note that there is no problem if the Light source 10 is in other wavelength bands. The narrower the line width of the laser light is, the better it is. However, the narrower the line width of the laser light is, the more expensive the laser light tends to be. The line width of the laser light is appropriately determined by design. The Light source 10 is preferably a light source in a continuous-wave manner, that is, a continuous wave (CW) light source, but may be a light source in a quasi-continuous-wave manner, that is, a quasi-CW (QCW)-operated light source in consideration of a case where an intermittent operation is performed due to a safety problem and the like.

Either the frequency modulator 20 or the phase modulator 20B may be used, but in this case, frequency modulation is applied to laser light emitted by the Light source 10. For the sake of simplicity, the description of the first embodiment will be given on the premise of using the frequency modulator 20. In addition, the frequency modulator 20 is controlled by the control signal circuit 200. Note that a reason why either the frequency modulator 20 or the phase modulator 20B may be used is that a relational formula represented by the following mathematical formula (1) is established.

$$d\theta/dt = 2\pi f \quad \bullet\bullet\bullet (1)$$

in which $\theta$ represents a phase, f represents a frequency, $\pi$ represents the circular constant, and t represents time.

The first beam splitter 30 splits the laser light modulated by the frequency modulator 20 into transmission light and local oscillator light. Usually, a beam splitter having an asymmetric branching ratio such as 9 : 1 is often used because the local oscillator light does not require so strong power. Note that the first beam splitter 30 may be a 5 : 5 beam splitter. In general, an optical fiber may be used as a beam splitter used in a laser radar device, and the constituent member may be referred to as another name such as an optical fiber coupler.

The amplifier 40 amplifies the transmission light out of the laser light split by the first beam splitter 30. The amplifier 40 may have a one-stage configuration or a multistage configuration. A fiber amplifier is often used for the amplifier 40, but an optical amplifier other than the fiber amplifier may be used. In a case of the multistage configuration, a fiber amplifier and an optical amplifier other than the fiber amplifier may be combined. In addition, in the case of the multistage configuration, a filter or an isolator for preventing return light may be inserted between an amplifier and an amplifier in order to remove amplified spontaneous emission (hereinafter, referred to as "ASE").

The transmission light amplified by the amplifier 40 is sent to the transmitting and receiving optics system 60 via the circulator 50. In general, a circulator refers to a device that transmits light input from an optical path A to an optical path B, but outputs light input from the optical path B not from the optical path A but from another optical path C. In addition, a circulator in a narrow sense refers to a circulator using a Faraday rotator, but the circulator 50 may be simply a combination of a polarization beam splitter and a 1/4 wavelength plate.

The transmitting and receiving optics system 60 adjusts a beam diameter of the transmission light, emits the transmission light into the atmosphere, and collects received light scattered by and returned from aerosol in the atmosphere. The transmitting and receiving optics system 60 includes a telescope and a beam expander. In addition, the transmitting and receiving optics system 60 may use a scanner in order to be able to observe a plurality of lines of sight.

The second beam splitter 70 interferes with the received light collected by the transmitting and receiving optics system 60 and the local oscillator light, and transmits two beams of interference light obtained by the interference to the balanced detector 80.

The balanced detector 80 includes two light receiving units, converts beams of light incident on the respective light receiving units into electrical signals, and outputs a difference between the two converted electrical signals. The balanced detector 80 may be an integrated light receiving element or may separately include a circuit that obtains a difference between photocurrents obtained from two photodiodes. The balanced detector 80 functions as a receiver, and therefore may be simply referred to as a receiver.

A role of the second beam splitter 70 is to obtain a frequency difference obtained by subtracting the frequency of the received light from the frequency of the local oscillator light. That is, this configuration utilizes a property that a beat of a difference between frequencies of two beams of light occurs as amplitude modulation when two beams of light having close frequencies interfere with each other. The balanced detector 80 is used to remove a DC component. Here, there is no problem if the frequency difference obtained by subtracting the frequency of the received light from the frequency of the local oscillator light is obtained by obtaining frequency components of the local oscillator light and the received light and then obtaining the frequency difference. In addition, since the frequency of the local oscillator light at each time is known, the frequency difference may be calculated simply by obtaining the frequency component of the received light in a time window in which the frequency of the local oscillator light is constant.

Note that the following paragraphs are based on the premise that the second beam splitter 70 and the balanced detector 80 are included.

The receiving circuit 210 processes the electrical signal converted by the balanced detector 80, and calculates distance information and speed information of a target. More specifically, the receiving circuit 210 processes the difference signal output from the balanced detector 80 and calculates wind speed information for each distance. The receiving circuit 210 includes an electric filter, an amplifier, an analog-digital converter, a computer, and the like.

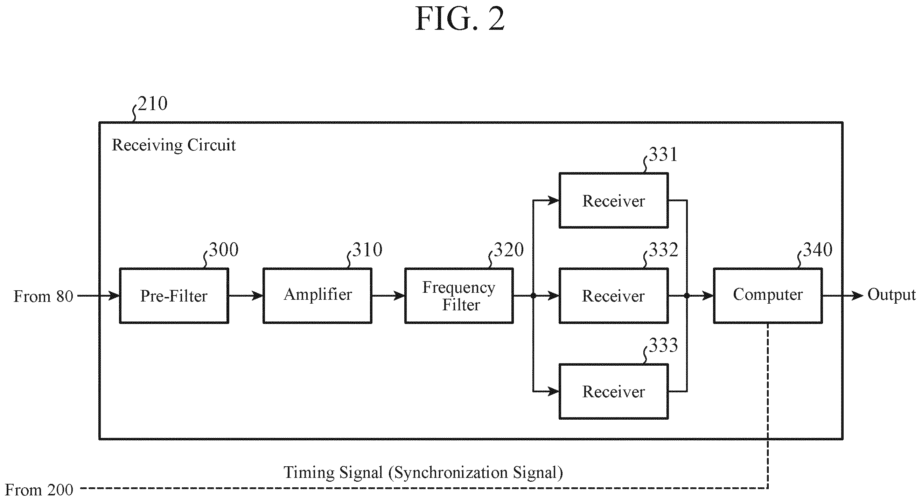

FIG. 2 is a configuration example of the receiving circuit 210. The receiving circuit 210 includes a pre-filter 300, an amplifier 310, a frequency filter 320, receivers 331 to 333, and a computer 340. Note that an electric amplifier may be used as the amplifier 310.

An unnecessary frequency of the difference signal output from balanced detector 80 is removed by the pre-filter 300, and then amplified by the amplifier 310. The amplified signal is distributed for each frequency domain by the frequency filter 320 and transmitted to the receivers 331 to 333 depending on the frequency domain. In general, since an amplifier has band characteristics, the amplifier 310 may also function as the pre-filter 300. In addition, since a band is limited after the frequency filter 320, the amplifier 310 may be disposed after the frequency filter 320. In this case, a common filter may be used as the pre-filter 300 and the frequency filter 320, and the same number of amplifiers as the number of receivers are required. In the configuration example illustrated in FIG. 2, three receivers are illustrated, but the number of receivers is appropriately determined by design. The receivers 331 to 333 are specifically analog-to-digital converters. The receivers 331 to 333 each transmit a reception signal to the computer 340. The computer 340 performs signal processing such as Fourier transform on the signals transmitted from the receivers 331 to 333, and calculates information regarding a distance and a wind condition. When performing signal processing, the computer 340 receives a timing signal and the like from the control signal circuit 200 as necessary and uses the timing signal and the like. The computer 340 may be a general-purpose computer such as a so-called personal computer, or may be a dedicated integrated circuit such as an application specific integrated circuit (ASIC). In addition, the computer 340 may be a combination of a plurality of types of computers.

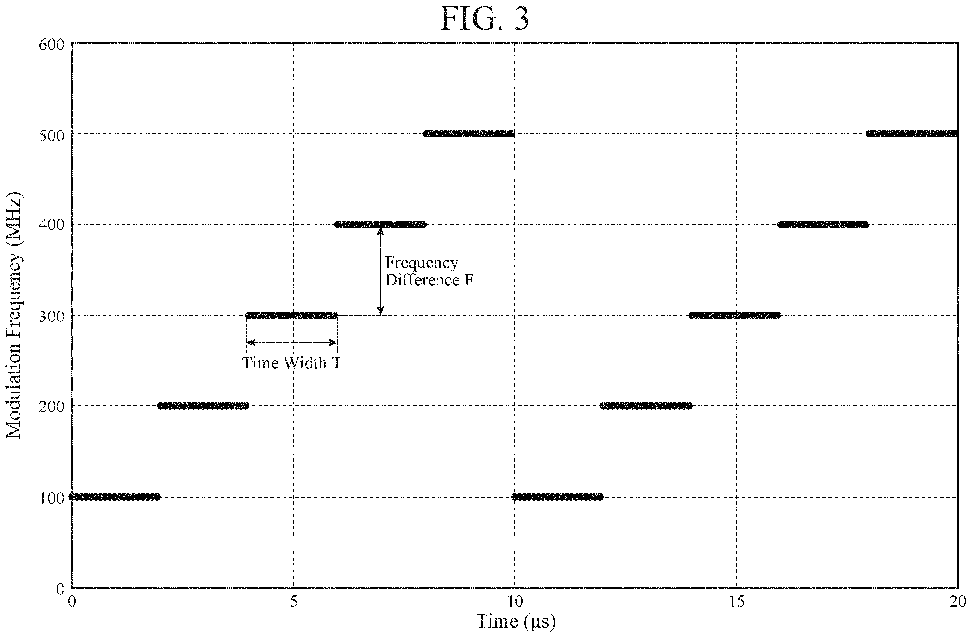

An operation of the laser radar device and a wind measurement method according to the first embodiment will be clarified by the following description with reference to FIG. 3.

FIG. 3 is a graph illustrating frequency modulation applied to transmission light by the frequency modulator 20. That is, the frequency modulation applied by the frequency modulator 20 is modulation in which a stepwise change in which a frequency increases or decreases by a frequency difference F for each time width T is performed for at least one step. As a result, transmission light of the laser radar device according to the present disclosed technique has stepwise frequency characteristics illustrated in FIG. 3.

The frequency difference F in the stepwise change is sufficiently larger than the Doppler frequency due to movement of aerosol in the air. The Doppler frequency $f_d$ due to movement of aerosol in the air is represented by the following mathematical formula (2), in which the frequency of light is represented by $v_0$, the Doppler frequency is represented by $f_d$, the wind speed is represented by V, and the light speed is represented by c.

$$f_d = -2v_0 V/c \quad \bullet\bullet\bullet \ (2)$$

Note that, as for the distance, a direction in which it goes away from the laser radar device serving as an origin is defined as a positive direction. In this case, also as for the speed, a direction in which it goes away from the laser radar device is considered as a positive speed. In this case, the wind speed has a positive value at the time of a tailwind, and has a negative value at the time of a headwind. The Doppler frequency $f_d$ may have either a positive value or a negative value corresponding to this. For example, when the frequency of light is 2 [THz] ($\approx$ wavelength 1.5 [$\mu$m]), the Doppler frequency $f_d$ is -1.33 [MHz] per 1 [m/s] of wind speed. Therefore, it can be said that the Doppler frequency $f_d$ when the frequency difference F is 100 [MHz] as illustrated in FIG. 3 is sufficiently larger than the Doppler frequency $f_d$ in a general wind condition. Note that the frequency difference F is not limited to 100 [MHz], and may be a smaller frequency or a larger frequency. For example, in weather terms, wind having a speed of more than 30 m/s is defined as "furious wind" by the Japan Meteorological Agency, but a wind condition having a speed of more than 30 m/s does not often occur on the ground. Even if it occurs, a storm occurs, and therefore it is often difficult to perform lidar measurement due to an influence of rain grains and dust. Therefore, even if the frequency difference F is set to 80 [MHz], which corresponds to distinguishing between a wind speed of about + 30 [m/s] and a wind speed of about -30 [m/s], there is no practical problem.

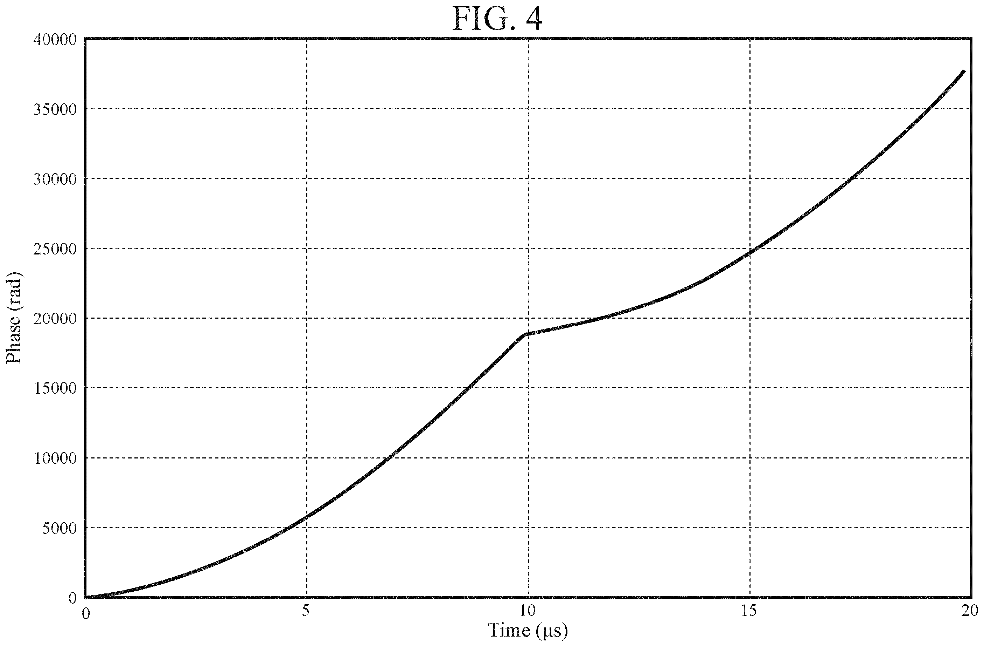

FIG. 3 illustrates the properties of the transmission light of the laser radar device according to the present disclosed technique in terms of frequency, but can also illustrate the properties of the transmission light in terms of phase using formulas (1) and (2). FIG. 4 is a graph illustrating the frequency modulation illustrated in FIG. 3 as phase modulation. Note that, in general, a phase modulator cannot apply infinitely large phase modulation, and a phase is folded back at $2\pi$ in many cases, but this does not cause a problem. Controlling the phase modulator 20B by the control signal circuit 200 and applying the phase modulation as illustrated in FIG. 4 is substantially the same as the frequency modulation in the present disclosed technique. The graph of FIG. 4 is constituted by a polygonal line, and it can be seen that the phase continuously changes. Information on a phase cannot be read at a time when the frequency is switched from the graph of FIG. 3, but in the frequency modulation, the phase changes continuously as illustrated in FIG. 4.

An effect of the present disclosed technique will be clarified by the following specific example.

Transmission light of the laser radar device having the frequency characteristics illustrated in FIG. 3 is scattered by aerosol in the atmosphere and measured as received light. The received light is subjected to a Doppler shift corresponding to the speed of aerosol that is a wind condition of the atmosphere, and is received after a lapse of time $\tau$ that is TOF corresponding to the position of the scattered aerosol.

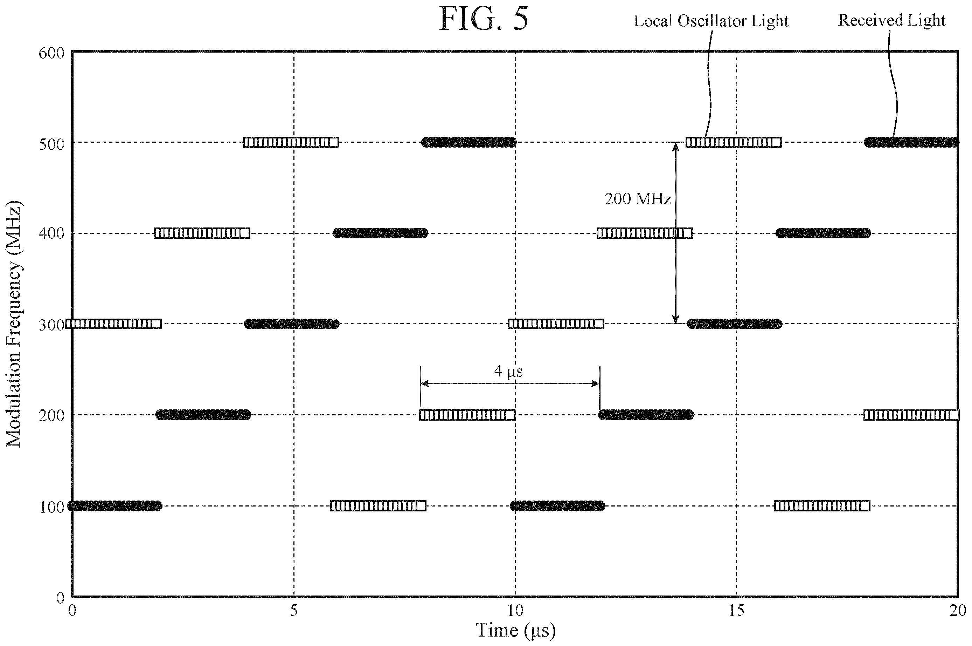

FIG. 5 is a graph illustrating local oscillator light and received light in the laser radar device according to the present disclosed technique in comparison with each other as a time change in frequency for the following specific example.

For example, light scattered from aerosol at a position of 600 [m] from the laser radar device is received after a lapse of 4 [μs], which is time during which the light flies for a distance of 1200 [m] in going and returning ways. This is because the light speed is 300,000 kilometers per second. The local oscillator light and the received light received by the balanced detector 80 have frequency characteristics illustrated in FIG. 5. In this specific example, the frequency modulator 20 applies a frequency modulation in which a stepwise change is performed by a frequency difference F of 100 [MHz] for a time width T of 2 [μs].

Here, the light scattered from the aerosol at the position of 600 [m] is received in a time-shifted manner after a lapse of TOF of 4 [μs]. Since the laser radar device according to the present disclosed technique uses stepwise frequency modulation, the information on the TOF is converted into information of a frequency difference that the frequency of the received light is lower than that of the local oscillator light by 200 [MHz]. Furthermore, since the received light is influenced by a Doppler shift, a relationship between the frequency of the received light and the frequency of the local oscillator light can be represented by the following mathematical formula (3).

$$\text{(Frequency of received light)} = \text{(Frequency of local oscillator light)} -200 \text{ [MHz]} - f_d \cdots \qquad (3)$$

The influence of the Doppler shift will be described by the following specific example. When the frequency of light is 2 [THz] (≈ wavelength 1.5 [μm]), the Doppler frequency $f_d$ is -1.33 [MHz] per 1 [m/s] of wind speed. Therefore, when the frequency of the received light is lower than that of the local oscillator light by 202.66 [MHz], it can be seen that a wind condition at the distance of 600 [m] is + 2 [m/s], that is, 2 [m/s] of a tailwind.

As described above, the laser radar device according to the present disclosed technique divides the frequency difference between the local oscillator light and the received light by the frequency difference F, and determines a frequency difference corresponding to a remainder as the Doppler frequency $f_d$. In the specific example described above, the present disclosed technique divides the frequency difference 202.66 [MHz] between the local oscillator light and the received light by the frequency difference F = 100 [MHz], and determines 2.66 [MHz] corresponding to a remainder as the Doppler frequency $f_d$.

When the frequency difference between the received light and the local oscillator light is 197.34 [MHz], a remainder obtained by dividing the frequency difference by the frequency difference F = 100 [MHz] is not considered as 97.34 [MHz]. A reference frequency is considered as 200 [MHz] close to 197.34 [MHz], that is, it is considered that the frequency is 2.66 [MHz] short, and it is considered that a wind condition at the distance of 600 [m] is -2 [m/s], that is, 2 [m/s] of a headwind.

FIG. 5 illustrates an example in which TOF = 4 [μs] is exactly an integral multiple of a time width T = 2 [μs]. When the TOF is an integral multiple of the time width T, the stepwise frequency of the local oscillator light changes at the same timing as the stepwise frequency of the received light. That is, when the received light is observed at a timing when the frequency of the local oscillator light is constant, for example, when the received light is observed in a time window of 12 [μs] to 14 [μs] in which the frequency of the local oscillator light is 400 [MHz], the frequency of the received light is a constant value of 200 [MHz] in the entire section.

In the present disclosed technique, there is no particular problem even if the TOF is not exactly an integral multiple of the time width T. The following specific example clarifies a way of thinking when the TOF is not exactly an integral multiple of the time width T.

Consider a case where the TOF is 3.5 [μs]. Similarly, when the received light is observed in a time window of 12 [μs] to 14 [μs] in which the frequency of the local oscillator light is 400 [MHz], the frequency of the received light is 200 [MHz] in a section of 12 [μs] to 13.5 [μs], and 300 [MHz] in a section of 13.5 [μs] to 14 [μs]. That is, the frequency difference F is 200 [MHz] in a section of 12 [μs] to 13.5 [μs], and 100 [MHz] in a section of 13.5 [μs] to 14 [μs].

Also consider a case where the TOF is 4.5 [μs]. Similarly, when the received light is observed in a time window of 12 [μs] to 14 [μs] in which the frequency of the local oscillator light is 400 [MHz], the frequency of the received light is 100 [MHz] in a section of 12 [μs] to 12.5 [μs], and 200 [MHz] in a section of 12.5 [μs] to 14 [μs]. That is, the frequency difference F is 300 [MHz] in a section of 12 [μs] to 12.5 [μs], and 200 [MHz] in a section of 12.5 [μs] to 14 [μs].

As described above, according to the present disclosed technique, the received light is observed in a time window in which the frequency of the local oscillator light is constant, and the TOF can be obtained from information on the two frequencies of the observed received light and information on a timing at which the frequency of the received light is switched. The information on the frequency of the received light is obtained by Fourier transform by the computer 340.

The laser radar device may obtain a wind condition for each certain distance range (hereinafter, referred to as "range"). In the first embodiment, the frequency filter 320 and the receivers 331 to 333 correspond thereto.

The following is a specific example of the frequency filter 320 according to the first embodiment. For example, the frequency filter 320 includes three types of band pass filters. Specifically, the frequency filter 320 includes a band pass filter of 50 to 150 [MHz], a band pass filter of 150 to 250 [MHz], and a band pass filter of 250 to 350 [MHz]. In addition, the frequency filter 320 is disposed so as to send frequency components of 50 to 150 MHz to the receiver 331, frequency components of 150 to 250 MHz to the receiver 332, and frequency components of 250 to 350 MHz to the receiver 333.

When the frequency filter 320 and the receivers 331 to 333 are included as described above, information on a wind condition near a distance of 300 [m] can be measured by the receiver 331, information on a wind condition near a distance of 600 [m] can be measured by the receiver 332, and information on a wind condition near a distance of 900 [m] can be measured by the receiver 333. The computer 340 can calculate a wind condition in each range by performing Fourier transform on an electrical signal measured by each of the receivers and obtaining a peak frequency.

FIG. 2 illustrates a configuration in which signals are separated by the frequency filter 320 in the receiving circuit 210 and then Fourier transform is performed on each of the signals, but it is not limited thereto. The laser radar device according to the present disclosed technique may convert a signal into a digital signal by performing AD conversion with one receiver without using the frequency filter 320, and then may perform Fourier transform and range decomposition on the digital signal.

A signal including a frequency component of 50 MHz or less corresponding to a distance of zero includes a signal generated by reception of light scattered by the optical system until the light is emitted into the atmosphere from the circulator 50 through the transmitting and receiving optics system 60 by the balanced detector 80. Such scattered light generated inside the device is generally stronger than scattered light generated by aerosol in the atmosphere. In order to solve this problem, by inclusion of the pre-filter 300 that prevents saturation of the amplifier 310, scattered light generated inside the device can be removed. As a result, SN in the receiving circuit 210 can be improved.

The laser radar device according to the first embodiment has the above configuration, and therefore includes a mechanism for separating frequency information resulting from a distance to a target and frequency information resulting from a speed of the target by a simple method.

Second embodiment.

In the first embodiment, the configuration in which frequency modulation is performed on laser light and then the laser light is split into transmission light and local oscillator light has been described, but the present disclosed technique is not limited to this configuration. A laser radar device according to a second embodiment splits laser light into transmission light and local oscillator light and then performs frequency modulation or phase modulation. The same reference signs are used for components common to those in the first embodiment, and redundant description is omitted.

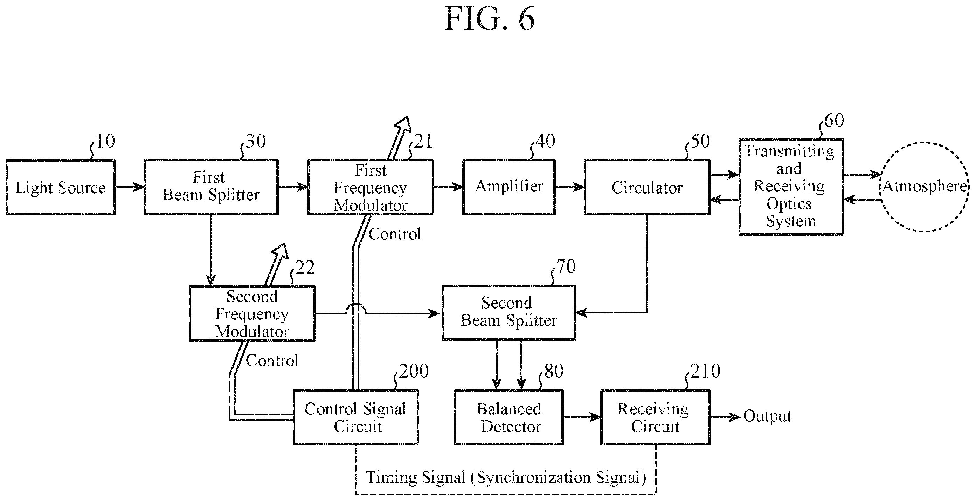

FIG. 6 is a configuration diagram illustrating a configuration of the laser radar device according to the second embodiment. The laser radar device according to the second embodiment does not include the frequency modulator 20 or the phase modulator 20B at a former stage of the first beam splitter 30. Instead, the laser radar device according to the second embodiment includes a first frequency modulator 21 and a second frequency modulator 22 in parallel at a later stage of the first beam splitter 30.

Laser light emitted from a Light source 10 is split into transmission light and local oscillator light by the first beam splitter 30. The transmission light is transmitted to the first frequency modulator 21, and the local oscillator light is transmitted to the second frequency modulator 22, and frequency modulation is applied to each of the transmission light and the local oscillator light. Although description has been given in the first embodiment, a phase modulator may be used instead of the frequency modulator. That is, phase modulation may be applied to the transmission light and the local oscillator light by a first phase modulator 21B and a second phase modulator 22B, respectively. Both the first frequency modulator 21 and the second frequency modulator 22 are controlled by a control signal circuit 200, and perform modulation in synchronization. When the first phase modulator 21B and the second phase modulator 22B are used, similarly, the first phase modulator 21B and the second phase modulator 22B perform modulation in synchronization.

Advantages of using separate modulators for the transmission light and the local oscillator light will be clarified by the following specific example. As a specific example, the first phase modulator 21B and the second phase modulator 22B are used. Phase modulation applied by the first phase modulator 21B is represented by $\theta(t)$, and phase modulation applied by the second phase modulator 22B is represented by $\varphi(t)$. If the same phase modulation is applied to the transmission light and the local oscillator light as in the first embodiment, $\theta(t)$ and $\varphi(t)$ satisfy the following mathematical formula (4).

$$\varphi(t)=\theta(t) \quad \cdots (4)$$

The laser radar device according to the second embodiment applies modulation in which time is shifted between the phase modulation $\theta(t)$ of the transmission light and the phase modulation $\varphi(t)$ of the local oscillator light. A relationship between $\theta(t)$ and $\varphi(t)$ satisfies the following mathematical formula (5).

$$\varphi(t + t_1) = \theta(t) \quad \bullet\bullet\bullet \ (5)$$

Formula (5) means that the phase modulation $\theta$ of the transmission light is delayed by time $t_1$ as compared with the phase modulation $\varphi$ of the local oscillator light.

Here, it is assumed that the phase modulation $\theta$ of the transmission light is phase modulation corresponding to frequency modulation as illustrated in FIG. 3. In addition, it is assumed that the phase modulation $\theta$ of the transmission light has a time delay of $t_1 = 1$ [$\mu$s]. In this case, when TOF is 3 [$\mu$s], a response of received light is the same as that in FIG. 5.

Similarly to the first embodiment, the frequency filter 320 includes a band pass filter of 50 to 150 [MHz], a band pass filter of 150 to 250 [MHz], and a band pass filter of 250 to 350 [MHz]. In addition, the band pass filters are arranged so as to send frequency components of 50 to 150 MHz to a receiver 331, frequency components of 150 to 250 MHz to a receiver 332, and frequency components of 250 to 350 MHz to a receiver 333. As a result, information on a wind condition near a distance of 150 [m] can be measured by the receiver 331, information on a wind condition near a distance of 450 [m] can be measured by the receiver 332, and information on a wind condition near a distance of 750 [m] can be measured by the receiver 333.

It is difficult to observe a range including a distance of zero because noise is large due to scattered light generated inside the device as described above. However, according to the laser radar device according to the second embodiment, a wind condition in a range close to a distance of zero can also be measured. The laser radar device according to the second embodiment exhibits the above effect in addition to the effect described in the first embodiment. Note that the positions of the first frequency modulator 21 and the second frequency modulator 24 are not limited to the positions illustrated in FIG. 6. The positions of the first frequency modulator 21 and the second frequency modulator 24 only need to satisfy the relationship represented by the mathematical formula (5). For example, the first frequency modulator 21 may be between the Light source 10 and the first beam splitter 30.

Third embodiment.

A configuration of a laser radar device according to a third embodiment is similar to that of the second embodiment except for a receiving circuit 210. The same reference signs are used for components common to those in the first or second embodiment, and redundant description is omitted.

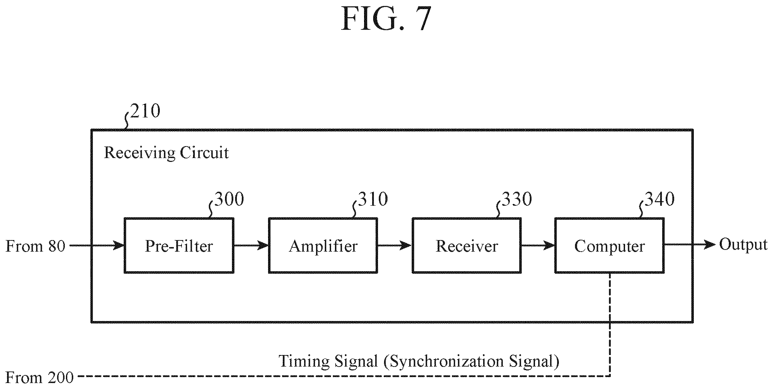

FIG. 7 is a configuration diagram illustrating a configuration example of the receiving circuit 210 of the laser radar device according to the third embodiment. The laser radar device according to the third embodiment includes one receiver 330, and measures only a frequency range selected by a pre-filter 300. The pre-filter 300 removes a frequency corresponding to a distance of zero and transmits a frequency corresponding to a certain range. The pre-filter 300 may be constituted by one filter or may be constituted by combining two or more types of filters. In the laser radar device according to the third embodiment, an amplifier may also serve as a filter by using frequency characteristics of an amplifier 310.

An operation of the laser radar device according to the third embodiment will be clarified by the following specific example. A second phase modulator 22B included in the laser radar device according to the third embodiment applies phase modulation $\varphi(t)$ represented by the following formula (6).

$$\varphi(t - t_2) = \theta(t) \quad \bullet\bullet\bullet \ (6)$$

Note that formula (6) is different from formula (5) of the second embodiment in positive and negative of the shift time. Formula (6) means that the phase modulation $\theta$ of the transmission light advances by time $t_2$ as compared with the phase modulation $\varphi$ of the local oscillator light.

Here, it is also assumed that the phase modulation $\theta$ of the transmission light is phase modulation corresponding to frequency modulation as illustrated in FIG. 3. In addition, it is assumed that the phase modulation $\theta$ of the transmission light has a time advance of t2 = 2 [$\mu$s]. In this case, when TOF is 6 [$\mu$s], a response of received light is the same as that in FIG. 5.

The pre-filter 300 of the laser radar device according to the third embodiment is a band pass filter of 50 to 150 [MHz], and the receiver 330 is included at a later stage of the pre-filter 300. In this specific example, the receiver 330 can measure a range of 600 [m]. A range to be measured can be changed by changing t2. The laser radar device according to the third embodiment intensively measures one variable range.

In FIG. 5, it can be seen that when up-chirp modulation is selected as the frequency modulation, the frequency of the local oscillator light is shifted to a side higher than the frequency of delayed received light. Meanwhile, in this specific example, a response of received light corresponding to a distance of zero is on a side where the frequency of the received light is 100 MHz higher by the time advance of t2 = 2 [$\mu$s].

In general, in light interference, a negative frequency and a positive frequency are measured as the same frequency whose phases are reversed in a processing system in which an interference fringe is measured by a balanced detector and an electrical signal is processed. Therefore, strong scattered light having a distance of zero is mixed in information on a range desired to be measured. In order to prevent this, by applying an offset to a frequency added to the local oscillator light or the received light, it is possible to prevent mixing of information on another range due to folding back of a negative frequency as described above. That is, by obtaining the following formula (7) by adding a term of an offset frequency to the left side of formula (6), it is possible to prevent a negative frequency from being folded back.

$$\varphi(t - t_2) + 2\pi f_o t = \theta(t) \quad \cdots (7)$$

in which $f_o$ represents an offset frequency. Applying an offset to the frequency is none other than movement of a plot of the local oscillator light or a plot of the received light in the vertical axis direction in FIG. 5.

With the above configuration, the laser radar device according to the third embodiment can measure a plurality of ranges by switching a delay time of a modulation frequency with one receiver. In addition, as a range has a longer distance, measurement at a higher frequency is necessary, and with such a configuration, the laser radar device according to the third embodiment can also be expected to lower the measurement frequency. In general, design of a circuit is more difficult as a frequency is higher, but the present disclosed technique can perform similar measurement by lowering the frequency, and can be expected to reduce cost.

Fourth embodiment.

The specific examples described in the first to third embodiments have clarified a detection principle of wind conditions at the points of 300 [m], which is a half of a distance for which light moves with a time width T = 2 [μs], and 600 [m], 900 [m], ..., which are multiples of the distance. A laser radar device according to a fourth embodiment can easily obtain not only wind conditions at points of discrete distances determined by the time width T but also a wind condition at a point between the points of the discrete distances.

A problem to be solved by the laser radar device according to the fourth embodiment will be clarified by the following description with the same time width T = 2 [μs] as the specific examples described in the above embodiments. In the frequency modulation, up-chirp signals are adopted as illustrated in FIG. 3, and the frequency difference F is 100 [MHz]. For example, light scattered from aerosol at a distance of 450 [m] is received 3 [μs] after emission from the device. Here, a period during which the frequency of the local oscillator light is constant is used as an observation window, and information on the frequency of the received light is observed. For example, an observation window of 4 [μs] to 6 [μs], in which the frequency of the local oscillator light is constant at 300 [MHz], is considered. The frequency of the received light is about 100 [MHz] in a first half time of the observation window, and the Doppler frequency is added. The frequency of the received light is about 200 [MHz] in a second half time of the observation window, and the Doppler frequency is added. That is, as for the frequency of the received light, time during which the frequency is about 200 [MHz] lower than the frequency of the local oscillator light and time during which the frequency is about 100 [MHz] lower than the frequency of the local oscillator light are mixed. As described above, when a signal whose frequency is switched halfway is subjected to Fourier transform in a wide time window of one cycle or more, a peak is generated at an intermediate frequency. Therefore, with only the configurations described in the first to third embodiments, it is difficult to distinguish between the position information and the speed information for the observation target.

An object of the laser radar device according to the fourth embodiment is to systematically obtain a wind condition at a point close to a boundary between a range and a range.

In order to solve the above problem, the laser radar device according to the fourth embodiment includes two discrete modulation lidar systems, and applies inverse frequency modulations to the respective two systems. Beams of laser light of the two systems are emitted to the atmosphere, and the beams of received light reflected by aerosol are mixed by a receiving circuit of the laser radar device.

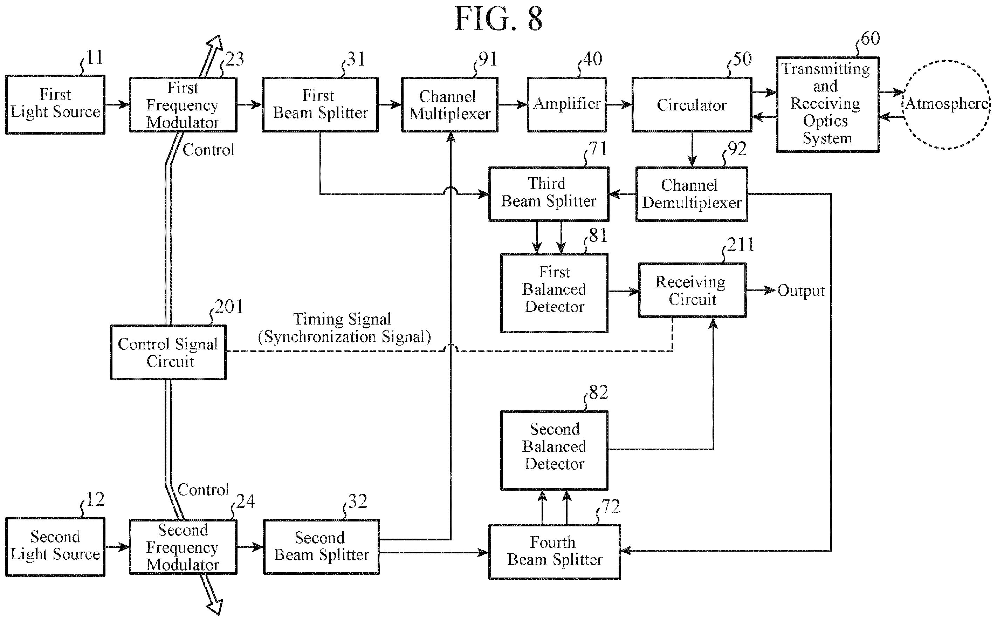

FIG. 8 is a configuration diagram illustrating a configuration of the laser radar device according to the fourth embodiment. As illustrated in FIG. 8, the laser radar device according to the fourth embodiment includes a first Light source 11, a second Light source 12, a first frequency modulator 23, a second frequency modulator 24, a first beam splitter 31, a second beam splitter 32, an amplifier 40, a circulator 50, a transmitting and receiving optics system 60, a third beam splitter 71, a fourth beam splitter 72, a first balanced detector 81, a second balanced detector 82, a channel multiplexer 91, a channel demultiplexer 92, a control signal circuit 201, and a receiving circuit 211.

Note that, in the description of the technique according to the fourth embodiment, the same reference signs are used as much as possible for components common to those in the above embodiments, and redundant description is omitted appropriately.

The first Light source 11 is the same as the Light source 10 in the laser radar devices according to the first to third embodiments. The second Light source 12 is a Light source having a wavelength different from that of the first Light source 11. A reason why the wavelength of the second Light source 12 is different from that of the first Light source 11 is to easily couple respective beams of laser light to each other and to easily split the respective beams of laser light from each other. The second Light source 12 may have a different mode by performing different polarization instead of having a different wavelength from that of the first Light source 11.

The first frequency modulator 23 and the second frequency modulator 24 function in the same manner as the frequency modulator 20 of the laser radar devices according to the first to third embodiments. The first frequency modulator 23 and the second frequency modulator 24 may be replaced with a first phase modulator 23B and a second phase modulator 24B, respectively. Synchronism is important for modulation added by the first frequency modulator 23 and the second frequency modulator 24. Therefore, the laser radar device according to the fourth embodiment includes the control signal circuit 201, and the control signal circuit 201 controls the first frequency modulator 23 and the second frequency modulator 24.

The first beam splitter 31 and the second beam splitter 32 function in the same manner as the first beam splitter 30 of the laser radar devices according to the first to third embodiments. Beams of laser light output from the first Light source 11 and the second Light source 12 are modulated by the first frequency modulator 23 and the second frequency modulator 24, respectively, and are split into transmission light and local oscillator light by the first beam splitter 31 and the second beam splitter 32, respectively. Branching ratios of the first beam splitter 31 and the second beam splitter 32 are determined by design.

The transmission light split by the first beam splitter 31 and the transmission light split by the second beam splitter 32 are multiplexed by the channel multiplexer 91. When the second Light source 12 emits laser light having a wavelength different from that of the first Light source 11, the channel multiplexer 91 only needs to be formed by a wavelength filter that transmits the wavelength of the first Light source 11 and reflects the wavelength of the second Light source 12. In general, a wavelength filter formed of an optical fiber may be referred to as a WDM coupler. When polarization of the second Light source 12 is different from that of the first Light source 11, the channel multiplexer 91 may be a polarization beam splitter. In addition, the polarization beam splitter may be referred to as a polarization coupler or a polarization combiner.

The transmission light multiplexed by the channel multiplexer 91 is amplified by the amplifier 40. The amplifier 40 is similar to those of the laser radar devices according to the first to third embodiments. In the configuration example illustrated in FIG. 8, the two channels are multiplexed in a former stage of the amplifier 40, and a common optical path is used after the amplifier 40, thus simplifying the structure. The laser radar device according to the present disclosed technique is not limited thereto, and the amplifiers 40 may be prepared for two channels so as to be included for the respective channels. Since an upper limit of output of the amplifier 40 is limited by a non-linear effect, it is possible to amplify light intensity per channel with higher intensity by inclusion of amplifiers for the number of channels. When the amplifier 40 has a multistage configuration, the channel multiplexer 91 may be disposed between the first-stage amplifier 40 and the second-stage amplifier 40.

Output from the amplifier 40 is transmitted to the transmitting and receiving optics system 60 through the circulator 50. This operation is the same as those of the laser radar devices according to the first to third embodiments. It should be noted that, when beams of laser light having different wavelengths are used between the first Light source 11 and the second Light source 12, the transmitting and receiving optics system 60 is an optical system in which chromatic aberration is reduced.

The laser light emitted to the atmosphere is reflected by aerosol in the atmosphere, and is incident on the transmitting and receiving optics system 60 as received light. The incident received light is separated from the transmission light by the circulator 50 and is incident on the channel demultiplexer 92. The channel demultiplexer 92 is a component that functions inversely with the channel multiplexer 91. That is, the channel demultiplexer 92 emits, of the received light, a component corresponding to the wavelength of the first Light source 11 to the third beam splitter 71, and emits a component corresponding to the wavelength of the second Light source 12 to the fourth beam splitter 72. Note that there is no problem even if the wavelength of the second Light source 12 is mixed in the third beam splitter 71 or the wavelength of the first Light source 11 is mixed in the fourth beam splitter 72. The channel demultiplexer 92 may be constituted by a beam splitter. Note that, when the channel demultiplexer 92 is constituted by a beam splitter, light intensity is lost by 3 [db].

The component corresponding to the wavelength of the first Light source 11 emitted from the channel demultiplexer 92 and the local oscillator light split by the first beam splitter 31 interfere with each other in the third beam splitter 71. The two beams of interference light obtained in the third beam splitter 71 are emitted to the first balanced detector 81. Note that the same applies to the system from the second Light source 12, and thus description thereof is omitted here.

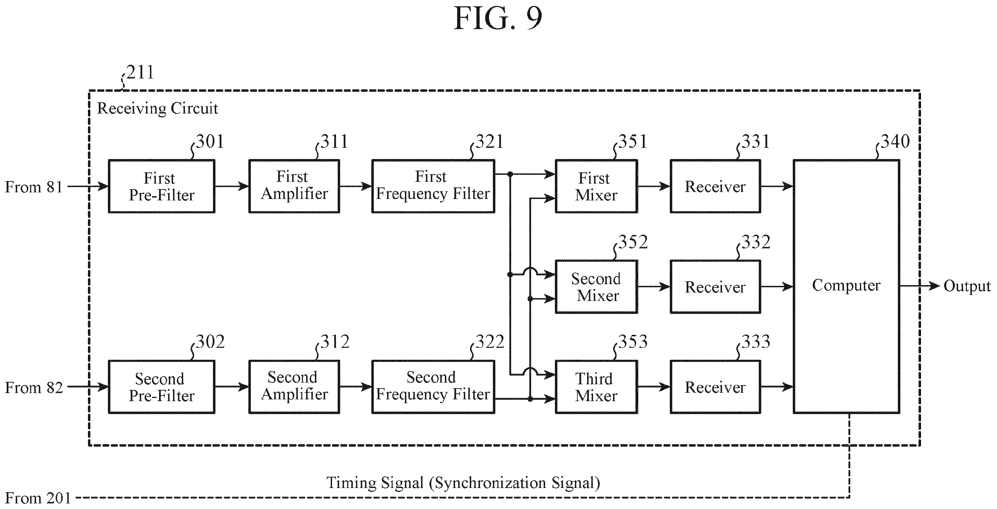

The receiving circuit 211 processes the signals obtained from the first balanced detector 81 and the second balanced detector 82 and calculates wind speed information for each distance. The receiving circuit 211 includes an electric filter, an amplifier, an analog-digital converter, and a computer. FIG. 9 is a configuration diagram illustrating a configuration of the receiving circuit 211. As illustrated in FIG. 9, the receiving circuit 211 includes a first pre-filter 301, a second pre-filter 302, a first amplifier 311, a second amplifier 312, a first frequency filter 321, a second frequency filter 322, a first mixer 351, a second mixer 352, a third mixer 353, receivers 330 (331, 332, and 333), and a computer 340.

A processing flow of the receiving circuit 211 of the laser radar device according to the fourth embodiment is the same as that of the first embodiment up to the first pre-filter 301, the first amplifier 311, and the first frequency filter 321. The receiving circuit 211 also includes the second pre-filter 302, the second amplifier 312, and the second frequency filter 322 in parallel in order to process a signal from the second balanced detector 82. The first frequency filter 321 distributes and emits signals emitted from the first amplifier 311 to the first mixer 351, the second mixer 352, and the third mixer 353 for each frequency. FIG. 9 illustrates the configuration including the three mixers, but it is not limited thereto, and any number of mixers may be arranged. Similarly, the second frequency filter 322 distributes and outputs signals output from the second amplifier 312 to the first mixer 351, the second mixer 352, and the third mixer 353 for each frequency.

The first mixer 351, the second mixer 352, and the third mixer 353 output a signal having a sum frequency or a difference frequency to the receivers 330 (331, 332, and 333) by multiplying the received signals by each other. In general, whether a sum frequency signal or a difference frequency signal is obtained by a mixer depends on phases of two input signals. Therefore, each of the first mixer 351, the second mixer 352, and the third mixer 353 may include a phase adjustment mechanism. A processing flow from the receivers 330 (331, 332, and 333) to the computer 340 is the same as that in the first embodiment.

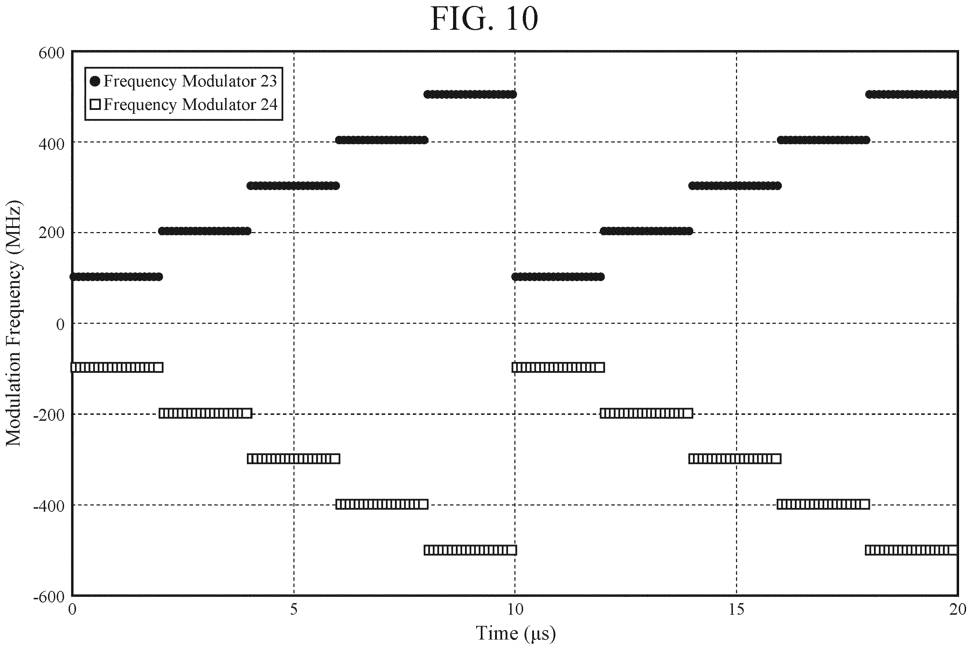

An operation principle of the laser radar device according to the fourth embodiment will be clarified by the following specific example with reference to the drawings. FIG. 10 is a graph illustrating frequency modulation applied by each of the first frequency modulator 23 and the second frequency modulator 24 of the laser radar device according to the fourth embodiment. Note that as described in the above embodiments, the first frequency modulator 23 and the second frequency modulator 24 may be replaced with a first phase modulator 23B and a second phase modulator 24B, respectively.

Each frequency modulation applied by the first frequency modulator 23 and the second frequency modulator 24 is modulation in which a stepwise change in which a frequency increases or decreases by a frequency difference F for each time width T is performed for at least one step. The transmission light of the laser radar device according to the fourth embodiment has stepwise frequency characteristics as illustrated in FIG. 10. The example of FIG. 10 illustrates stepwise frequency modulation of five steps with a time width T = 2 [μs] and a frequency difference F = 100 [MHz]. The first frequency modulator 23 adopts up-chirp stepwise frequency modulation, and the second frequency modulator 24 adopts down-chirp stepwise frequency modulation. In the present disclosed technique, the frequency difference F is sufficiently larger than a Doppler shift frequency.

The laser radar device according to the fourth embodiment is characterized in that two systems of beams of transmission light are generated, one of the systems is up-chirp, and the other of the systems is down-chirp. Each of the two systems of beams of transmission light is emitted to the atmosphere, scattered by aerosol in the atmosphere, and measured as received light. The received light interferes with the local oscillator light and is received by the balanced detector.

An effect of the laser radar device according to the fourth embodiment will be clarified by the following specific example. As a specific example, consider that there is aerosol at a point having a distance of 600 [m]. In this specific example, the received light is delayed by 4 [μs] as compared with the local oscillator light. The received light corresponding to the up-chirp stepwise local oscillator light has a frequency of -200 [MHz] + Doppler frequency $f_d$ as compared with the frequency of the local oscillator light. Conversely, the received light corresponding to the down-chirp stepwise local oscillator light has a frequency of +200 [MHz] + Doppler frequency $f_d$ as compared with the frequency of the local oscillator light.

The laser radar device according to the fourth embodiment includes the first frequency filter 321 and the second frequency filter 322 so as to perform processing for the two systems. The first frequency filter 321 and the second frequency filter 322 output frequency components from 50 [MHz] to 150 [MHz] to the first mixer 351, frequency components from 150 [MHz] to 250 [MHz] to the second mixer 352, and frequency components from 250 [MHz] to 350 [MHz] to the third mixer 353. As a result, also in the laser radar device according to the fourth embodiment, information on a wind condition near a distance of 300 [m] is intended to be measured by the receiver 331, information on a wind condition near a distance of 600 [m] is intended to be measured by the receiver 332, and information on a wind condition near a distance of 900 [m] is intended to be measured by the receiver 333.

The mixers 350 (351, 352, and 353) aim to obtain a sum frequency by multiplying two input signals by each other. In a specific example of aerosol at a point having a distance of 600 [m], a signal of "-200 [MHz] + Doppler frequency $f_d$" and a signal of "200 [MHz] + Doppler frequency $f_d$" are input to the second mixer 352. The second mixer 352 outputs a signal of a sum frequency having a frequency twice the Doppler frequency $f_d$ to the receiver 333.

Next, a specific example of aerosol at a point having a distance of 450 [m], to be solved by the laser radar device of the fourth embodiment, will be considered. Received light of an up-chirp system is observed as "-200 [MHz] + Doppler frequency $f_d$" in the first half of the observation window and "-100 [MHz] + Doppler frequency $f_d$" in the second half of the observation window. Received light of a down-chirp system is observed as "+200 [MHz] + Doppler frequency $f_d$" in the first half of the observation window and "+100 [MHz] + Doppler frequency $f_d$" in the second half of the observation window. Also in this specific example, the mixers 350 (351, 352, and 353) each output a signal of a sum frequency having a frequency twice the Doppler frequency $f_d$.

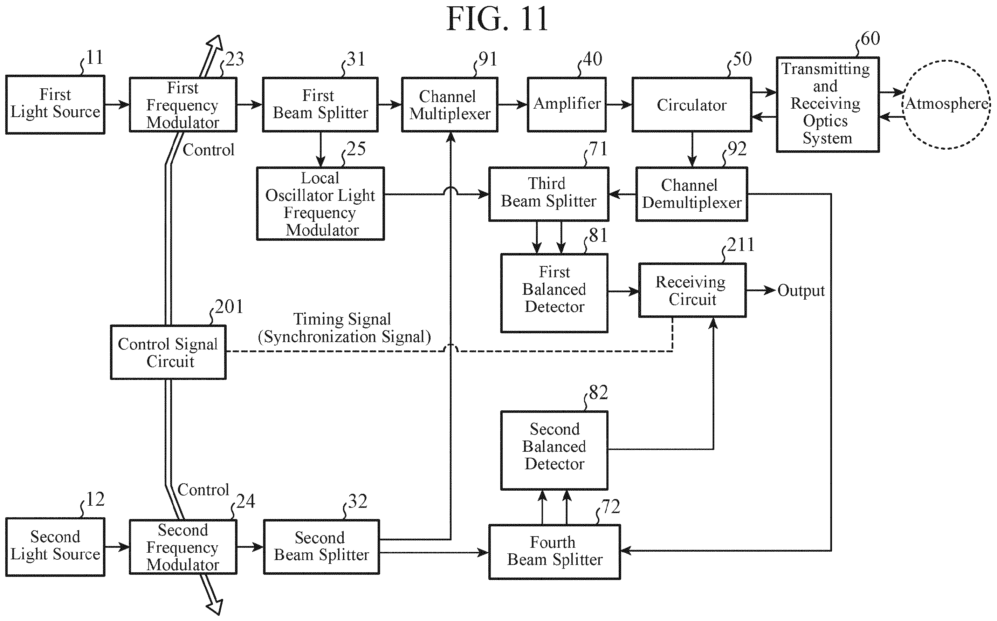

FIG. 11 is a configuration diagram illustrating a modified configuration example of the laser radar device according to the fourth embodiment. As illustrated in FIG. 11, a local oscillator light frequency modulator 25 may be inserted into any one of the two systems. The following specific example will clarify an effect of inserting the local oscillator light frequency modulator 25. For example, it is assumed that the local oscillator light frequency modulator 25 reduces the frequency of first local oscillator light by 100 [MHz]. Light scattered from aerosol at a distance of 450 [m] is received 3 [$\mu$s] after emission from the device. A reception signal of the first system becomes "-300 [MHz] + Doppler frequency $f_d$" in the first half of the observation window and becomes "-200 MHz + $f_d$ frequency" in the second half of the observation window. Meanwhile, a reception signal of the second system becomes "+200 [MHz] + Doppler frequency $f_d$" in the first half of the observation window and becomes "+100 MHz + $f_d$ frequency" in the second half of the observation window.

In this case, the mixer 350 (351, 352, 353) each output a value obtained by adding a value obtained by multiplying the Doppler frequency $f_d$ by 2 to -100 MHz. In this manner, with the configuration of the modified example illustrated in FIG. 11, the Doppler signal can be prevented from coming near a DC component with large noise, and improvement of SN can be expected. Here, the local oscillator light frequency modulator 25 may be replaced with a local oscillator light phase modulator 25B. In addition, the local oscillator light frequency modulator 25 may use an acousto-optic modulator (AOM) as a frequency shifter. In addition, the local oscillator light frequency modulator 25 may be inserted on a side of second local oscillator light, or may shift the frequency of first signal light by being inserted between the first beam splitter 31 and the channel multiplexer 91. Alternatively, the local oscillator light frequency modulator 25 may shift the frequency of second signal light.

In other words, the laser radar device according to the fourth embodiment is a laser radar device including: the first balanced detector 81 that receives received light and first local oscillator light and converts each of the received light and the first local oscillator light into a first electrical signal; the second balanced detector 82 that receives received light and second local oscillator light and converts each of the received light and the second local oscillator light into a second electrical signal; and a receiving circuit that processes the first electrical signal and the second electrical signal converted by the first balanced detector 81 and the second balanced detector 82 and calculates distance information and speed information of a target, in which the frequency modulation applied by the first frequency modulator 23 is modulation in which a stepwise change in which a frequency increases or decreases by a frequency difference F for each time width T is performed for at least one step, the frequency modulation applied by the second frequency modulator 24 is modulation in which a frequency decreases or increases by the frequency difference F for each time width T, the modulation being reverse to that performed by the first frequency modulator 23, and a Doppler frequency $f_d$ is obtained by mixing the frequency of the received light for the first transmission light and the frequency of the received light for the second transmission light.

With the above configuration, the laser radar device according to the fourth embodiment can accurately measure a wind condition at any position regardless of how the range is taken in addition to exhibiting the effects of the laser radar devices according to the above embodiments.

Fifth embodiment.

A laser radar device according to a fifth embodiment is obtained by adding a new configuration to the configuration of the laser radar device according to the fourth embodiment. The laser radar device according to the fifth embodiment uses a first Light source 11 in accordance with a gas absorption line. Here, the gas refers to a gas in the atmosphere, an exhaust gas from a factory, a gas leaked from a pipe, or the like. In the description of the technique according to the fifth embodiment, the same reference signs are used as much as possible for components common to those in the above embodiments, and redundant description is omitted appropriately.

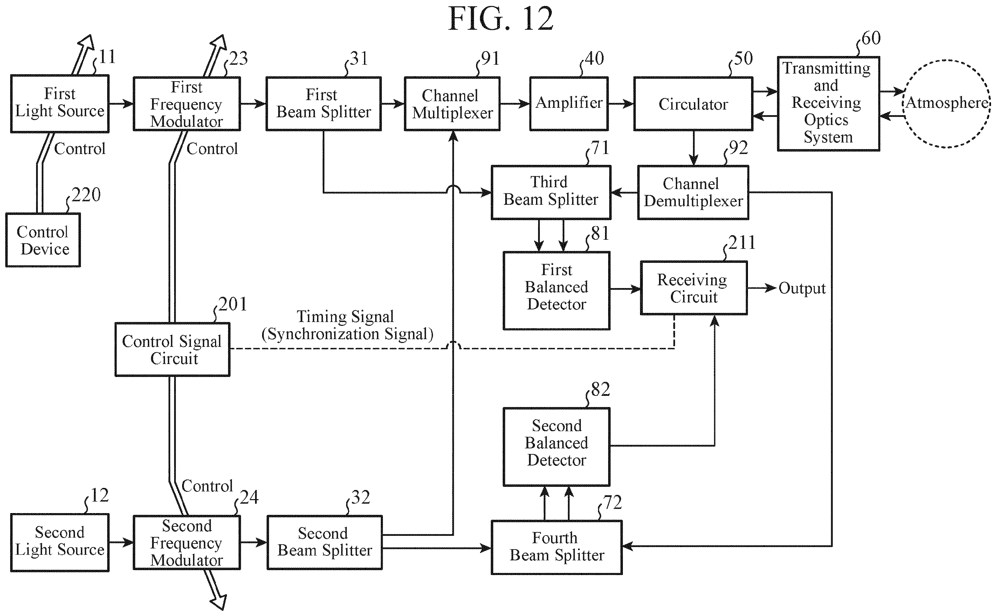

FIG. 12 is a configuration diagram illustrating a configuration of the laser radar device according to the fifth embodiment. As illustrated in FIG. 12, the laser radar device according to the fifth embodiment includes a control device 220 that controls the first Light source 11. The control device 220 locks the first Light source 11 to a gas absorption line. The laser radar device according to the fifth embodiment can measure a concentration distribution of a gas in the atmosphere by setting a wavelength a second Light source 12 to a wavelength at which the gas is less absorbed. When the first Light source 11 is a laser diode, a wavelength thereof can be finely adjusted by a temperature or a current value. In general, since a gas absorption line is narrow, feedback control using a gas cell can be considered as control performed by the control device 220. When the gas absorption line is relatively broad, the control device 220 can control a temperature or a current value of the first Light source 11 in an open loop and can lock the wavelength of the first Light source 11 to the gas absorption line.

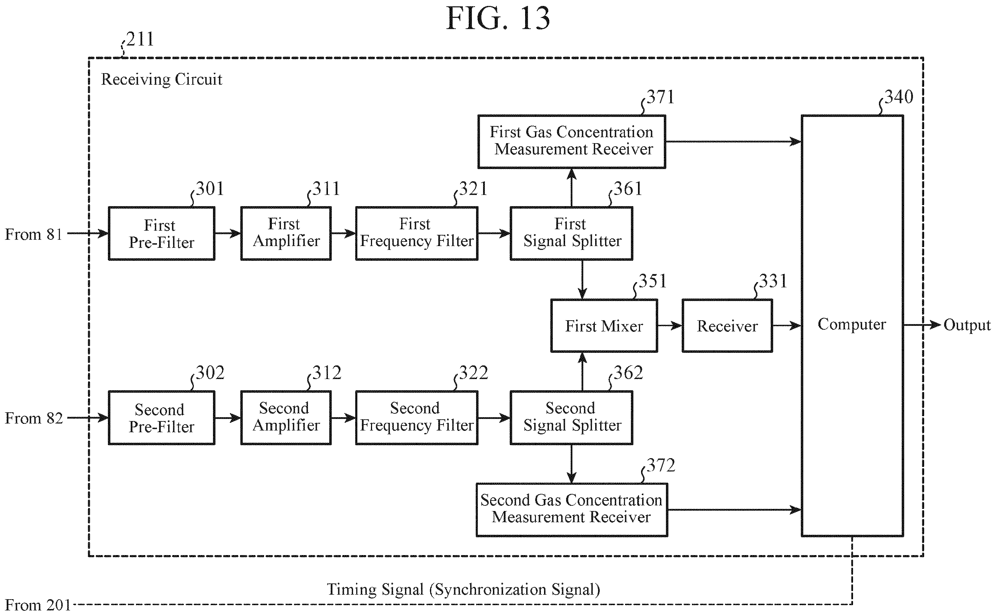

FIG. 13 is a configuration diagram illustrating a configuration example of a receiving circuit 211 of the laser radar device according to the fifth embodiment. As illustrated in FIG. 13, the receiving circuit 211 includes a first frequency filter 321 and a second frequency filter 322. Signals distributed by the first frequency filter 321 and the second frequency filter 322 for each frequency are divided into two systems by a first signal splitter 361 and a second signal splitter 362, respectively. Note that only the first signal splitter 361 and the second signal splitter 362 are illustrated in FIG. 13 for easy viewing, but signal splitters 360 are required for the number of distance ranges. Signals divided by the signal splitters 360 (361 and 362) are measured by a first gas concentration measurement receiver 371 and a second gas concentration measurement receiver 372, respectively. A signal intensity measured by the first gas concentration measurement receiver 371 is relatively weaker than a signal intensity measured by the second gas concentration measurement receiver 372 due to absorption by a gas. The laser radar device according to the fifth embodiment measures a gas concentration distribution from the signal intensity ratio.

In other words, in the laser radar device according to the fifth embodiment, the first Light source 11 emits first laser light having a wavelength controlled to match an absorption line of a gas component to be measured, the second Light source 12 emits second laser light having a wavelength different from that of the first Light source 11, and the laser radar device further includes: the first gas concentration measurement receiver 371 that receives a component corresponding to the first laser light in the received light; and the second gas concentration measurement receiver 372 that receives a component corresponding to the second laser light in the received light, and can measure the concentration of the gas component in the atmosphere by decomposing the concentration for each distance.

The laser radar device according to the fifth embodiment can measure a wind condition by combination with the method described in the fourth embodiment. In the measurement of the wind condition, signals divided by the first signal splitter 361 and the second signal splitter 362 are input to a first mixer 351. The first mixer 351 can output a sum frequency to the receiver 331 and can calculate a Doppler frequency $f_d$.

The laser radar device according to the fifth embodiment has the above configuration, and therefore can simultaneously measure a gas distribution in the atmosphere and a wind condition.

INDUSTRIAL APPLICABILITY

The laser radar device according to the present disclosed technique can be used for a device that measures a wind condition and a gas distribution in the atmosphere.

REFERENCE SIGNS LIST

10: Light source, 11: First Light source, 12: Second Light source, 20: Frequency modulator, 20B: Phase modulator, 21 and 23: First frequency modulator, 21B and 23B: First phase modulator, 22 and 24: Second frequency modulator, 22B and 24B: Second phase modulator, 25: Local oscillator light frequency modulator, 25B: Local oscillator light phase modulator, 30 and 31: First beam splitter, 32: Second beam splitter, 40: Amplifier, 50: Circulator, 60: Transmitting and receiving optics system, 70: Second beam splitter, 71: Third beam splitter, 72: Fourth beam splitter, 80: Balanced detector, 81: First balanced detector, 82: Second balanced detector, 91: Channel multiplexer, 92: Channel demultiplexer, 200 and 201: Control signal circuit, 210 and 211: Receiving circuit, 220: Control device, 300: Pre-filter, 301: First pre-filter, 302: Second pre-filter, 310: Amplifier, 311: First amplifier, 312: Second amplifier, 320: Frequency filter, 321: First frequency filter, 322: Second frequency filter, 330, 331, 332, and 333: Receiver, 340: Computer, 350: Mixer, 351: First mixer, 352: Second mixer, 353: Third mixer, 360: Signal splitter, 361: First signal splitter, 362: Second signal splitter, 371: First gas concentration measurement receiver, 372: Second gas concentration measurement receiver

**Claims**

1. A laser radar device comprising:

   a Light source (10) to oscillate laser light in a continuous-wave manner or a quasi-continuous-wave manner;
   a frequency modulator (20) to apply frequency modulation to the laser light oscillated by the Light source (10);
   a beam splitter (30) to split the laser light modulated by the frequency modulator (20) into transmission light and local oscillator light;
   a transmitting and receiving optics system (60) to transmit the transmission light and to receive light reflected from a target;
   a receiver (80) to receive the received light and the local oscillator light received by the transmitting and receiving optics system (60) and to convert each of the received light and the local oscillator light into an electrical signal; and
   a receiving circuit (210) to process the electrical signal converted by the receiver and to calculate distance information and speed information of the target, wherein
   the frequency modulation applied by the frequency modulator (20) is modulation in which a stepwise change in which a frequency increases or decreases by a frequency difference F for each time width T is performed for at least one step,
**characterized in that**:

the frequency of the local oscillator is constant in a given time window,
wherein the laser radar device includes a mechanism for separating frequency information resulting from a distance to a target and frequency information resulting from a speed of the target,
wherein the receiving circuit (210) divides a frequency difference between the local oscillator light and the received light by the frequency difference F, and determines a frequency difference corresponding to a remainder or a shortage as a Doppler frequency $f_d$,
wherein the frequency difference F in the stepwise change is sufficiently larger than the Doppler frequency due to movement of aerosol in the air.

2. The laser radar device according to claim 1, wherein the frequency difference F is larger than twice a Doppler frequency corresponding to a wind speed of 30 [m/s].

3. The laser radar device according to claim 1, wherein
modulation in which time is shifted between the transmission light and the local oscillator light can be applied.

4. The laser radar device according to claim 1, wherein
an offset can be applied to a frequency added to the local oscillator light or the received light.

5. A wind measurement method comprising:

oscillating laser light in a continuous-wave manner or a quasi-continuous-wave manner;
applying frequency modulation to the laser light;
splitting modulated laser light into transmission light and local oscillator light;
amplifying the transmission light;
transmitting the amplified transmission light and receiving light reflected from a target as received light;
further receiving the received light and the local oscillator light and converting each of the received light and the local oscillator light into an electrical signal; and
processing the converted electrical signal and calculating distance information and speed information of the target, wherein
the frequency modulation is modulation in which a stepwise change in which a frequency increases or decreases by a frequency difference F for each time width T is performed for at least one step,
**characterized in that**:

the frequency of the local oscillator is constant in a given time window,
wherein the method further comprises separating frequency information resulting from a distance to a target and frequency information resulting from a speed of the target,
wherein a frequency difference between the local oscillator light and the received light is divided by the frequency difference F, and a frequency difference corresponding to a remainder or a shortage is determined as a Doppler frequency $f_d$,
wherein the target is aerosol in the atmosphere,
wherein the frequency difference F in the stepwise change is sufficiently larger than the Doppler frequency due to movement of aerosol in the air.

**Patentansprüche**

1. Laserradarvorrichtung, umfassend:

eine Lichtquelle (10), um Laserlicht in einer kontinuierlichen Wellenart oder einer quasi-kontinuierlichen Wellenart oszillieren zu lassen;
einen Frequenzmodulator (20), um eine Frequenzmodulation auf das durch die Lichtquelle (10) oszillierende Laserlicht anzuwenden;
einen Strahlteiler (30) zum Aufteilen des durch den Frequenzmodulator (20) modulierten Laserlichts in Übertragungslicht und lokales Oszillatorlicht;
ein optisches Übertragungs- und Empfangssystem (60) zum Übertragen des Übertragungslichts und zum Empfangen des von einem Ziel reflektierten Lichts;

einen Empfänger (80) zum Empfangen des Empfangslichts und des lokalen Oszillatorlichts, das von dem optischen Übertragungs- und Empfangssystem (60) empfangen wird, und zum Umwandeln des Empfangslichts und des lokalen Oszillatorlichts in ein elektrisches Signal; und

eine Empfangsschaltung (210) zum Verarbeiten des vom Empfänger umgewandelten elektrischen Signals und zum Berechnen von Abstandsinformationen und Geschwindigkeitsinformationen des Ziels, wobei

die durch den Frequenzmodulator (20) angewandte Frequenzmodulation eine Modulation ist, bei der eine schrittweise Änderung, bei der eine Frequenz um eine Frequenzdifferenz F für jede Zeitbreite T ansteigt oder abfällt, für mindestens einen Schritt durchgeführt wird,

**dadurch gekennzeichnet, dass**:

die Frequenz des lokalen Oszillators in einem bestimmten Zeitfenster konstant ist,

wobei die Laserradarvorrichtung einen Mechanismus zum Trennen von Frequenzinformationen, die sich aus einem Abstand zu einem Ziel ergeben, und Frequenzinformationen, die sich aus einer Geschwindigkeit des Ziels ergeben, enthält,

wobei die Empfangsschaltung (210) eine Frequenzdifferenz zwischen dem lokalen Oszillatorlicht und dem Empfangslicht durch die Frequenzdifferenz F unterteilt und eine Frequenzdifferenz, die einem Rest oder einer Unterdeckung entspricht, als Dopplerfrequenz $f_d$, bestimmt,

wobei die Frequenzdifferenz F bei der schrittweisen Änderung ausreichend größer ist als die Dopplerfrequenz aufgrund der Bewegung des Aerosols in der Luft.

2. Laserradarvorrichtung nach Anspruch 1, wobei die Frequenzdifferenz F größer ist als das Zweifache einer Dopplerfrequenz, die einer Windgeschwindigkeit von 30 [m/s] entspricht.

3. Laserradarvorrichtung nach Anspruch 1, wobei
eine Modulation, bei der das Übertragungslicht und das lokale Übertragungslicht zeitlich verschoben sind, angewendet werden kann.

4. Laserradarvorrichtung nach Anspruch 1, wobei
ein Offset auf eine Frequenz angewendet werden kann, die dem lokalen Oszillatorlicht oder dem Empfangslicht hinzugefügt wird.

5. Windmessungsverfahren, umfassend:

Oszillieren des Laserlichts in einer kontinuierlichen Wellenart oder einer quasi-kontinuierlichen Wellenart;
Anwenden der Frequenzmodulation auf das Laserlicht;
Aufteilen des modulierten Laserlichts in Übertragungslicht und lokales Oszillatorlicht;
Verstärken des Übertragungslichts;
Übertragen des verstärkten Übertragungslichts und Empfangen des von einem Ziel reflektierten Lichts als Empfangslicht;
ferner Empfangen des Empfangslichts und lokale Oszillatorlichts und Umwandeln sowohl des Empfangslichts als auch des lokalen Oszillatorlichts in ein elektrisches Signal; und
Verarbeiten des umgewandelten elektrischen Signals und Berechnen von Abstandsinformationen und Geschwindigkeitsinformationen des Ziels, wobei
die Frequenzmodulation eine Modulation ist, bei der eine schrittweise Änderung, bei der eine Frequenz um eine Frequenzdifferenz F für jede Zeitbreite T ansteigt oder abfällt, für mindestens einen Schritt durchgeführt wird,
**dadurch gekennzeichnet, dass**:

die Frequenz des lokalen Oszillators in einem bestimmten Zeitfenster konstant ist,

wobei das Verfahren ferner die Trennung von Frequenzinformationen, die sich aus einem Abstand zu einem Ziel ergeben, und Frequenzinformationen, die sich aus einer Geschwindigkeit des Ziels ergeben, umfasst,

wobei eine Frequenzdifferenz zwischen dem lokalen Oszillatorlicht und dem Empfangslicht durch die Frequenzdifferenz F unterteilt und eine Frequenzdifferenz, die einem Rest oder einer Unterdeckung entspricht, als Dopplerfrequenz $f_d$ bestimmt,

wobei das Ziel ein Aerosol in der Atmosphäre ist,

wobei die Frequenzdifferenz F bei der schrittweisen Änderung ausreichend größer ist als die Dopplerfrequenz aufgrund der Bewegung des Aerosols in der Luft.

**Revendications**

1.  Dispositif radar laser, comprenant :

    une source de lumière (10) pour faire osciller une lumière laser d'une manière à ondes continues ou d'une manière à ondes quasi-continues ;
    un modulateur de fréquence (20) pour appliquer une modulation de fréquence à la lumière laser mise à osciller par la source de lumière (10) ;
    un diviseur de faisceau (30) pour diviser la lumière laser modulée par le modulateur de fréquence (20) en une lumière d'émission et une lumière d'oscillateur local ;
    un système optique d'émission et de réception (60) pour émettre la lumière d'émission et pour recevoir la lumière réfléchie par une cible ;
    un récepteur (80) pour recevoir la lumière reçue et la lumière d'oscillateur local reçue par le système optique d'émission et de réception (60) et pour convertir chacune de la lumière reçue et de la lumière d'oscillateur local en un signal électrique ; et
    un circuit de réception (210) pour traiter le signal électrique converti par le récepteur et pour calculer des informations de distance et des informations de vitesse de la cible, dans lequel
    la modulation de fréquence appliquée par le modulateur de fréquence (20) est une modulation dans laquelle un changement par étapes, dans lequel une fréquence augmente ou diminue d'une différence de fréquence F pour chaque largeur de temps T, est effectué pour au moins une étape,
    **caractérisé en ce que** :

    la fréquence de l'oscillateur local est constante dans une fenêtre temporelle donnée,
    dans lequel le dispositif radar laser comprend un mécanisme pour séparer des informations de fréquence résultant d'une distance par rapport à une cible et des informations de fréquence résultant d'une vitesse de la cible,
    dans lequel le circuit de réception (210) divise une différence de fréquence entre la lumière d'oscillateur local et la lumière reçue par la différence de fréquence F, et détermine une différence de fréquence correspondant à un reste ou à une insuffisance en tant que fréquence Doppler $f_d$,
    dans lequel la différence de fréquence F dans le changement par étapes est suffisamment plus grande que la fréquence Doppler en raison du déplacement de l'aérosol dans l'air.

2.  Dispositif radar laser selon la revendication 1, dans lequel la différence de fréquence F est supérieure à deux fois une fréquence Doppler correspondant à une vitesse de vent de 30 [m/s].

3.  Dispositif radar laser selon la revendication 1, dans lequel
    une modulation dans laquelle le temps est décalé entre la lumière d'émission et la lumière d'oscillateur local peut être appliquée.

4.  Dispositif radar laser selon la revendication 1, dans lequel
    un décalage peut être appliqué à une fréquence ajoutée à la lumière d'oscillateur local ou à la lumière reçue.

5.  Procédé de mesure de vent comprenant les étapes consistant à :

    faire osciller une lumière laser d'une manière à ondes continues ou d'une manière à ondes quasi-continues ;
    appliquer une modulation de fréquence à la lumière laser;
    diviser la lumière laser modulée en lumière d'émission et lumière d'oscillateur local ;
    amplifier la lumière d'émission ;
    transmettre la lumière d'émission amplifiée et recevoir de la lumière réfléchie par une cible en tant que lumière reçue ;
    recevoir en outre la lumière reçue et la lumière d'oscillateur local et convertir chacune de la lumière reçue et de la lumière d'oscillateur local en un signal électrique ; et
    traiter le signal électrique converti et calculer des informations de distance et des informations de vitesse de la cible, dans lequel
    la modulation de fréquence est une modulation dans laquelle un changement par étapes, dans lequel une fréquence augmente ou diminue d'une différence de fréquence F pour chaque largeur de temps T, est effectué pour au moins une étape,
    **caractérisé en ce que** :

la fréquence de l'oscillateur local est constante dans une fenêtre temporelle donnée,

dans lequel le procédé comprend en outre une séparation d'informations de fréquence résultant d'une distance par rapport à une cible et d'informations de fréquence résultant d'une vitesse de la cible,

dans lequel une différence de fréquence entre la lumière d'oscillateur local et la lumière reçue est divisée par la différence de fréquence F, et une différence de fréquence correspondant à un reste ou à une insuffisance est déterminée en tant que fréquence Doppler $f_d$,

dans lequel la cible est un aérosol dans l'atmosphère,

dans lequel la différence de fréquence F dans le changement par étapes est suffisamment plus grande que la fréquence Doppler en raison du déplacement de l'aérosol dans l'air.

# FIG. 1

# FIG. 2

FIG. 3

EP 4 246 185 B1

# FIG. 4

EP 4 246 185 B1

# FIG. 5

Local Oscillator Light    Received Light

200 MHz

4 μs

Modulation Frequency (MHz)

Time (μs)

EP 4 246 185 B1

# FIG. 6

EP 4 246 185 B1

# FIG. 7

EP 4 246 185 B1

# FIG. 8

## FIG. 9

Receiving Circuit ⟨211

From 81 → [First Pre-Filter ⟨301] → [First Amplifier ⟨311] → [First Frequency Filter ⟨321] → [First Mixer ⟨351] → [Receiver ⟨331] → [Computer ⟨340] → Output

[Second Mixer ⟨352] → [Receiver ⟨332]

From 82 → [Second Pre-Filter ⟨302] → [Second Amplifier ⟨312] → [Second Frequency Filter ⟨322] → [Third Mixer ⟨353] → [Receiver ⟨333]

From 201 ----- Timing Signal (Synchronization Signal)

EP 4 246 185 B1

# FIG. 10

EP 4 246 185 B1

# FIG. 11

First Light Source — 11
First Frequency Modulator — 23
First Beam Splitter — 31
Channel Multiplexer — 91
Amplifier — 40
Circulator — 50
Transmitting and Receiving Optics System — 60
Atmosphere
Local Oscillator Light Frequency Modulator — 25
Third Beam Splitter — 71
Channel Demultiplexer — 92
First Balanced Detector — 81
Receiving Circuit — 211
Output
Control Signal Circuit — 201
Timing Signal (Synchronization Signal)
Control
Second Balanced Detector — 82
Second Light Source — 12
Second Frequency Modulator — 24
Second Beam Splitter — 32
Fourth Beam Splitter — 72

EP 4 246 185 B1

# FIG. 12

EP 4 246 185 B1

# FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019018138 A1
- DE 102019001275 A1

- US 2005162637 A1

**Non-patent literature cited in the description**

- **D. PIERROTTET et al.** Flight test performance of a high precision navigation Doppler Lidar. *Proceedings of SPIE*, 2009, vol. 7323, 732311